# EUROPEAN PATENT APPLICATION

(11) **EP 1 139 237 A1**
(43) Date of publication of application: **04.10.2001**
(21) Application number: 01302720.6
(22) Date of filing: 23.03.2001
(51) Int. Cl.: G06F 17/30

(54) **AV Information Retrieval System**

(30) Priority: 28.03.2000 JP 2000092993
(71) Applicant: Pioneer Corporation, Meguro-ku, Tokyo (JP)
(72) Inventor: Horiuchi, Naoaki, c/o Pioneer Corporation, Tsurugashima-shi, Saitama-ken (JP); Gayama, Shinichi c/o Pioneer Corporation, Saitama-ken (JP)
(74) Representative: Haley, Stephen

(57) **Abstract**

The present invention provides an AV information processing unit comprising: an AV information recording unit for accumulating the AV information including the audio information or the like; plural agents for performing partial information processing, which is a part of the information processing requested to be performed from the outside, by using the accumulated AV information and performing the partial information, which are different from each other, separately and respectively; and a scenario selection and performing agent for shifting at least a portion of utility information from the agent, which performed one partial information processing, to the agent for performing other partial information processing so that at least a portion of the utility information used for the one partial information processing can be used in the other partial information processing.

## Description

The present invention relates to a technical field of an AV information processing unit for processing AV information including at least any one of audio information including voice information and music information, video information including moving image information and static image information, and data information such as program data, character data or the like in response to at least any one of the audio information and the video information (hereinafter, simply referred to as AV information), and an information recording medium in which an AV information processing program are recorded so as to be capable of being read by a computer. More specifically, the present invention relates to a technical filed of an AV information processing unit for performing processing in response to a processing requirement from a user, and an information recording medium in which an AV information processing program are recorded so as to be capable of being read by computer.

For example, in the case that a user reproduces desired AV information from an AV information processing unit including a plurality of information recording media such as a hard disk or the like in which a plurality of AV information is recorded in advance, to listen or see it, conventionally, the user listens and sees the desired AV information in such a manner that the user himself or herself holds reproduction related information (specifically, identification information or the like for specifying an information recording medium, in which a song name or the AV information that the user desires to listen or see) related to the AV information in advance, designates the AV information that the user desires to listen and see by inputting the related information held by the user in the AV information processing unit and instructs the AV information processing unit to start reproduction thereof.

In this time, a conventional AV information processing unit searches the information recording medium by using inputted reproduction related information as a search condition. Then, the conventional AV information processing unit reproduces and outputs the searched AV information to the user.

However, in the above described AV information processing unit, when the reproduction related information inputted from the user is not registered as search information in the AV information processing unit in advance, it is impossible to set a search condition capable of being serrated in practice. As a result, this involves a problem such that there is a case that the user is not capable of reproducing and outputting the desired AV information.

Alternatively, if the AV information accumulated within the AV information processing unit extremely increases in quantity and varieties thereof increases, more complicated and prolonged operation is required until the user can reproduce the desired AV information by searching. As a result, this involves a problem such that operationality or the like as the AV information processing unit is deteriorated.

The present invention has been made taking the foregoing problems into consideration, an object of the invention is to provide an AV information processing unit such that a user who is not used to treat an AV information processing unit is capable of easily and quickly searching and reproducing necessary AV information, even in the case that the user should reproduce great varieties and quantity of the AV information, in other words, the user-friendly AV information processing unit, such that a user can perform necessary reproduction and an information recording medium, in which a program for processing the AV information is recorded so as to be capable of being read by a computer.

In order to solve the above problem, a first aspect of the present invention provides an AV information processing unit comprising: an AV information accumulating device such as an AV information recording portion for accumulating AV information which include any one of audio information, video information and data information associated with at least any one of the audio information and the video information; a characteristic information accumulating device such as a search agent for accumulating characteristic information defining the accumulated AV information, for each AV information; an inputting device for inputting search characteristic information defining the accumulated AV information required to be searched; an example inputting device such as a microphone for inputting example information to illustrate the AV information having a characteristic indicated by the search characteristic information, when the inputted search characteristic information is not included in the accumulated characteristic information; an extracting device such as a user learning agent for extracting example characteristic information being the characteristic information defining the inputted example information, from the example information; and an outputting device such as an AV control agent for searching the AV information associated with the extracted example characteristic information in the AV accumulating device and outputting the searched AV information to an exterior as the AV information associated with the search characteristic information.

Accordingly, when the inputted search characteristic information is not included in the characteristic information, the example characteristic information is extracted from separately inputted example information and further, the AV information associated with the extracted example characteristic information is outputted to an exterior as the AV information associated with the search characteristic information. Therefore, even in the case that the characteristic information associated with the search characteristic information is not accumulated and it is not possible to search the AV information on the basis of the accumulated characteristic information associated with the search characteristic information, it becomes possible to search the desired AV information on the basis of the example information from the user and to output it.

Therefore, even a user, who is not used to treat an AV information processing unit, is capable of treat the AV information processing unit to reproduce the desired AV information without dissatisfaction. In other words, this is a user-friendly AV information processing unit, such that a user can perform necessary reproduction.

In order to solve the above problems, a second aspect of the present invention provides an AV information processing unit according to the first aspect, further comprising: a corresponding information accumulating device such as a user learning agent for forming a corresponding information, which associates the extracted example characteristic information to the inputted search characteristic information and storing the formed corresponding information; and a search device such as a search agent for searching the example characteristic information from the characteristic information accumulating device on the basis of the accumulated corresponding information when the search characteristic information is inputted again after the corresponding information is accumulated in the corresponding information accumulating device; wherein the outputting device searches the AV information associated with the searched example characteristic information from the AV accumulating device when the search characteristic information is inputted again and the outputting device outputs the searched AV information to an exterior as the AV information associated with the search characteristic information.

Therefore, when the search characteristic information is newly inputted after the corresponding information is accumulated, searching the example characteristic information on the basis of the accumulated corresponding information and searching the AV information associated with the searched example characteristic information, the searched AV information is outputted to an exterior as the AV information associated with the search characteristic information. Thus it is possible to search the desired AV information on the basis of the accumulated corresponding information in the case that after the search characteristic information is once inputted, the same search characteristic information is inputted again.

Accordingly, in the case that the same search characteristic information is inputted again, it is possible to search necessary AV information more speedily so that the necessary AV information can be reproduced and be outputted.

In order to solve the above problems, a third aspect of the present invention provides an AV information processing unit according to the first or second aspect, wherein the example inputting device is used for inputting the different and plural example information and the extracting device extracts the example characteristic information, which is common among the inputted plural example information, from each of the example information.

Accordingly, even in the case that a plurality of example information are inputted, a desired AV information is capable of being accurately searched and outputted by appropriately extracting the example characteristic information.

In order to solve the above problems, a fourth aspect of the present invention provides an AV information processing unit according to any one of the first to third aspects, wherein the outputting device outputs the AV information associated with the extracted example characteristic information to an exterior as the AV information associated with the search characteristic information by using at least any one of a sound and an image.

Therefore, since the AV information, which is searched by using at least any one of a sound and an image, it is possible to provide the AV information associated with the search characteristic information in a form capable of easily being identified by the user.

In order to solve the above problems, a fifth aspect of the present invention provides an AV information processing unit according to any one of the first to fourth aspects, wherein the inputting device comprises a voice receiving device such as a voice recognizing agent for receiving input of the search characteristic information by voice.

Accordingly, the user can input easily search characteristic information by using the voice.

In order to solve the above problems, a sixth aspect of the present invention provides an AV information processing unit according to any one of the first to fifth aspects, wherein the example inputting device comprises an example voice receiving device for receiving input of the example information by voice.

Accordingly, the user can input easily the example information by using the voice.

In order to solve the above problems, according to a seventh aspect of the present invention, there is provided an information recording medium, wherein an AV information processing program is recorded so as to be capable of being read by a computer, for making the computer function as: an inputting device for inputting search characteristic information defining the AV information required to be searched in AV information, which are accumulated in advance and which includes any one of audio information, video information and data information associated with at least any one of the audio information and the video information; an example inputting device for illustrating the AV information having a characteristic indicated by the search characteristic information when the inputted search characteristic information is not included in the accumulated characteristic information, which define the accumulated AV information and which are accumulated in advance; an extracting device for extracting example characteristic information being the characteristic information defining the inputted example information from the example information; and an outputting device for searching the AV information associated with the extracted example characteristic information and outputting the searched AV information to an exterior as the AV information associated with the search characteristic information.

Accordingly, when the inputted search characteristic information is not included in the characteristic information, the example characteristic information is extracted from separately inputted example information and further, the AV information associated with the extracted example characteristic information is outputted to an exterior as the AV information associated with the search characteristic information. Therefore, even in the case that the characteristic information associated with the search characteristic information is not accumulated and it is not possible to search the AV information on the basis of the accumulated characteristic information associated with the search characteristic information, it becomes possible to search the desired AV information on the basis of the example information from the user and to output it.

Therefore, even a user, who is not used to treat an AV information processing unit, is capable of treat the AV information processing unit to reproduce the desired AV information without dissatisfaction. In other words, this is a user-friendly AV information processing unit, such that a user can perform necessary reproduction.

In order to solve the above problem, an eighth aspect of the present invention provides an information recording medium according to the seventh aspect, in which the AV information processing program is recorded so as to be capable of being read by the computer, for making the computer function as: a corresponding information accumulating device for forming a corresponding information, which associates the extracted example characteristic information to the inputted search characteristic information and accumulating the formed corresponding information; and a search device for searching the example characteristic information on the basis of the accumulated corresponding information when the search characteristic information is inputted again after the corresponding information is accumulated; wherein the information recording medium further makes the computer functioning as the outputting device function such that it searches the AV information associated with the searched example characteristic information when the search characteristic information is inputted again and it outputs the searched AV information to an exterior as the AV information associated with the search characteristic information.

Therefore, when the search characteristic information is newly inputted after the corresponding information is accumulated, searching the example characteristic information on the basis of the accumulated corresponding information and searching the AV information associated with the searched example characteristic information, the searched AV information is outputted to an exterior as the AV information associated with the search characteristic information. Thus, it is possible to search the desired AV information on the basis of the accumulated corresponding information in the case that after the search characteristic information is once inputted, the same search characteristic information is inputted again.

Accordingly, in the case that the same search characteristic information is inputted again, it is possible to search necessary AV information more speedily so that the necessary AV information can be reproduced and be outputted.

In order to solve the above problems, a ninth aspect of the present invention provides an information recording medium according to the seventh or eighth aspect, in which the AV information processing program is recorded so as to be capable of being read by the computer, wherein the information recording medium uses the computer functioning as the example inputting device to input different and plural the example information and makes the computer functioning as the extracting device function such that it extracts the example characteristic information, which is common among the inputted plural example information, from each of the example information.

Accordingly, even in the case that a plurality of example information are inputted, a desired AV information is capable of being accurately searched and outputted by appropriately extracting the example characteristic information.

In order to solve the above problems, a tenth aspect of the present invention provides an information recording medium according to any one of the seventh to ninth aspects, in which the AV information processing program is recorded so as to be capable of being read by the computer, wherein the information recording medium makes the computer functioning as the outputting device function such that it outputs the AV information associated with the extracted example characteristic information to an exterior as the AV information associated with the search characteristic information by using at least any one of a sound and an image.

Therefore, since the AV information, which is searched by using at least any one of a sound and an image, it is possible to provide the AV information associated with the search characteristic information in a form capable of easily being identified by the user.

In order to solve the above problem, en eleventh aspect of the present invention provides an information recording medium according to any one of the seventh to tenth aspects, in which the AV information processing program is recorded so as to be capable of being read by the computer, wherein the information recording medium makes the computer functioning as the example inputting device function as a voice receiving device for receiving input of the search characteristic information by voice.

Accordingly, the user can input easily the search characteristic information by using the voice.

In order to solve the above problems, a twelfth aspect of the present invention provides an information recording medium according to any one of the seventh to eleventh aspects, in which the AV information processing program is recorded so as to be capable of being read by the computer, wherein the information recording medium makes the computer functioning as the example inputting device function as an example voice receiving device for receiving input of the example information by voice.

Accordingly, the user can input easily the search characteristic information by using the voice.
FIG. 1 is a block diagram showing a schematic constitution of an AV information processing unit;

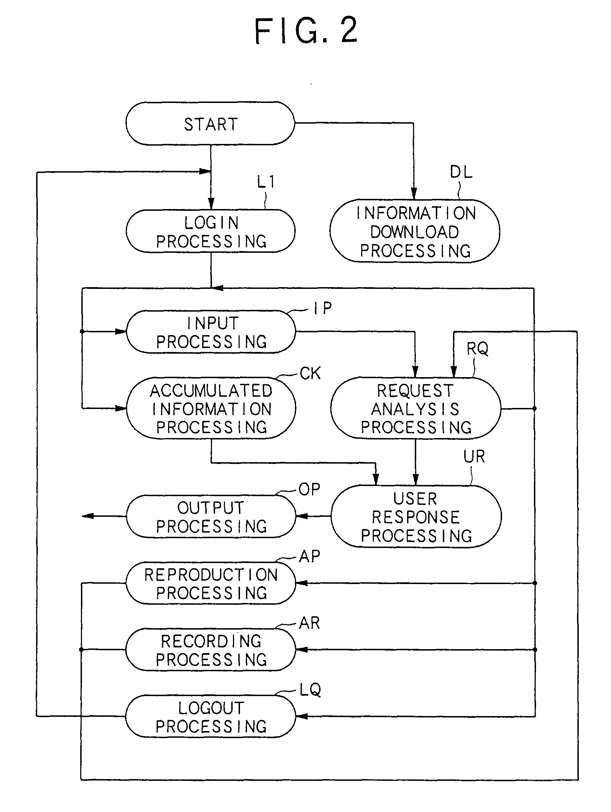

FIG. 2 is a flow chart showing a flow of each processing constituting the AV information processing schematically and in a module;
FIG. 3 is a flow chart showing search processing of an embodiment of the present invention;
FIGS. 4A to 4C are diagrams showing a search parameter and corresponding information; and FIG. 4A is a diagram showing a search parameter, FIF. 4B is a diagram showing the corresponding information and FIG. 4C is a diagram showing a specific example of the corresponding information; and
FIG. 5 is a diagram conceptually explaining the search processing according to the embodiment.

Preferred embodiments of the present invention will be explained below with reference to the drawings.

Alternatively, according to an embodiment to be explained below, necessary AV information can be reproduced from an AV information recording unit such as a hard disk or the like, in which the AV information is recorded. Simultaneously, in the present embodiment, the present invention is employed for an AV information processing unit, which is at lease capable of designating other necessary AV information to an information recording medium and recording the other necessary AV information in this information recording medium.

### (1) Embodiment of schematic constitution and operation of AV information processing unit

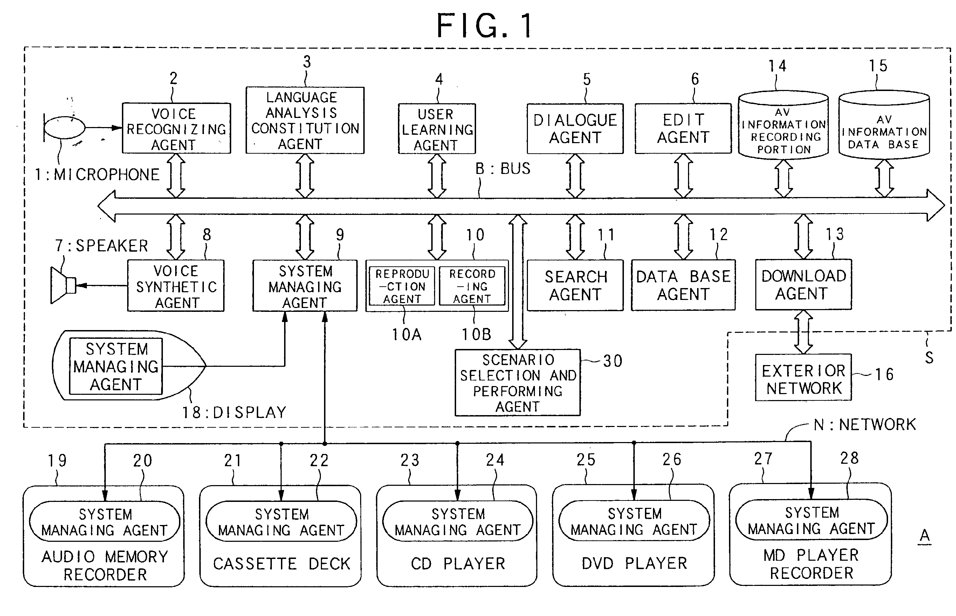

At first, a schematic constitution of the AV information processing unit according to the present embodiment will be explained with reference to FIG. 1. FIG. 1 is a block diagram showing a schematic constitution of the AV information processing unit.

As shown in FIG. 1, an AV information processing unit A according to the present embodiment itself is set in one house. Specifically, the AV information processing unit A is comprised of an AV information accumulation unit S, an audio memory recorder 19 capable of recording or reproducing the AV information with respect to an audio memory such as a semiconductor (solid matter) memory or an optical disk (specifically, a CD-R (Compact Disc-Recordable), a DVD-R (DVD-Recordable), a DVD-RAM (DVD-Random Access Memory) or the like) or the like, a cassette deck 21, a CD player 23, a DVD player 25 and a MD (Mini Disc) player recorder 27. Further, the audio memory recorder 19 or the like and the AV information accumulation unit S are connected through an net work N such as a domestic LAN (Local Area Network) or the like so that information can be given and received mutually.

On the other hand, the AV information accumulation unit S is comprised of an voice recognizing agent 2, to which a microphone 1 as a reception device is connected, a language analysis constitution agent 3, a user learning agent 4, a dialogue agent 5, an edit agent 6, a voice synthetic agent 8 to which a speaker 7 is connected as an outputting device, a system managing agent 9, an AV control agent 10 including a reproduction agent 10A as a performing device and a recording agent 10B as a performing device, a search agent 11, a data base agent 12, a download agent 13 as an obtaining device, a display 18 including a system managing agent 17, an AV information data base 15 as an AV information recording portion 14 composed of a hard disk and its driver in practice as an AV information accumulating device and a scenario selection and performing agent 30 as a shifting device. Further, respective agents, the AV information recording portion 14 and the AV information data base 15 are connected so that they can give and receive necessary information mutually through a bus B.

Alternatively, the download agent 13 is connected so that it can give and receive necessary information to and from an exterior network 16, for example, an Internet or the like.

On the other hand, each of the above audio memory recorder 19, the cassette deck 21, the CD player 23, the DVD player 25 and the DVD player recorder 27 includes system managing agents 20, 22, 24, 26 and 28, which are connected to an network N and which control the operation of each device.

In this case, the system managing agent 9 and respective managing agents 17, 20, 22, 24, 26 and 28 in the AV information accumulating unit S are connected respectively so that they can give and receive the information via the network N or the like.

Here, each of the above descried agents comprises a module (a program module) having a self-discipline, association and learning functions, by which each agent determines what should be processed and what should be outputted in accordance with a required content by themselves. In other words, this module enables the processing to be positively performed in accordance with the required content by an own judging criterion. In this case, respective agents are specifically implemented by a CPU or the like as a computer for implementing the processing on the basis of a program associated with functions of respective agents.

Alternatively, since the respective agents perform the processing given independently, respectively, for example, even in the case that any one of agents becomes inoperative due to some causes, other agents are capable of continuing other processing except for the processing related to the inoperative agent.

These agents are described in detail, for example, in "From Object Orientation to Agent Orientation", by Shinnichi Hoida and Akihiko Osuga, Soft Bank Kabushiki Kaisha, issued on May, 1998 or the like.

Next, each operation thereof will be explained.

At first, the audio memory recorder 19 records the AV information to be outputted from the AV information accumulation unit S via the network N under control of the system managing agent 20 in the specified information recording medium such as the above semiconductor memory or the like. Simultaneously, the audio memory recorder 19 outputs the AV information recorded in the information recording medium to the AV information accumulation unit S via the network N.

On the other hand, the cassette deck 21 records the AV information to be recorded, which is to be outputted from the AV information accumulation unit S via the network N under control of the system managing agent 22 in the fitted cassette tape. Simultaneously, the cassette deck 21 outputs the AV information recorded in the cassette tape to the AV information accumulation unit S via the network N.

Alternatively, the CD player 23 outputs the AV information recorded in the fitted CD to the AV information accumulation unit S via the network N under control of the system managing agent 24.

Furthermore, the DVD player 25 outputs the AV information recorded in the fitted DVD to the AV information accumulation unit S via the network N under control of the system managing agent 26.

Alternatively, the MD player recorder 27 records the AV information to be recorded, which is outputted from the AV information accumulation unit S via the network N in the fitted MD under control of the system managing agent 28. Simultaneously, the MD player recorder 27 outputs the AV information recorded in the MD to the AV information accumulation unit S via the network N.

Working with these connected devices, the AV information accumulation unit S outputs the necessary AV information to an interior of a house via the speaker 7 as described below in response to the request inputted from the user by wing voice. Simultaneously, the AV information accumulation unit S performs the processing such as recording other AV information in any information recording medium.

Next, a general operation of respective agents or the like included in the AV information accumulation unit S will be explained with reference to FIG. 1.

At first, wide variety of AV information are accumulated in the AV information recording portion 14 so that they are capable of being identified and read mutually.

Next, attributive information indicating each of the AV information recorded in the AV information recording portion 14 are recorded in the AV information data base 15 so that they can be distinguished mutually. More specifically, the attributive information comprises identification information for identifying a name of the recorded AV information, a category to which the recorded AV information belongs, a required time for reproduction and the recorded information recording medium or related information such as information that this recorded AV information is used as a theme song of a movie or the like.

On the other hand, the voice recognizing agent 2 is an agent having a function referred to as a voice recognizing engine to perform comparatively low intellectual processing. Specifically, recognizing a content of a voice signal associated with a voice of the user (a voice indicating a response or the like in accordance with the processing to be performed by using the AV information processing unit or the voice outputted from the speaker 7) to be inputted from the microphone 1, the voice recognizing agent 2 outputs content information indicating the identified content to the language analysis constitution agent 3 via the bus B.

Then, the language analysis constitution agent 3 is an agent for performing high intellectual processing. Specifically, the language analysis constitution agent 3 analyzes the received content information and translates it into an intermediate language capable of being identified by other agents except for the voice recognizing agent 2 and the voice synthetic agent 8 to output it to the bus B.

In addition to the above, receiving output information associated with a response sound or audio information to be outputted via the speaker 7 from the bus B as the intermediate language, the language analysis constitution agent 3 converts this received output information into a voice signal or audio information capable of being synthesized in the voice synthetic agent 8 to output it to the voice synthetic agent 8.

Alternatively, the voice synthetic agent 8 is an agent having a function referred to as a voice synthetic engine to perform comparatively low intellectual processing. Specifically, the voice synthetic agent 8 synthesizes the voice or the audio information to be outputted in practice by using the converted voice signal or the audio information to output the synthesized voice or audio information to the user in the house via the speaker 7.

Next, the dialogue agent 5 is an agent for performing high intellectual processing. Specifically, the dialogue agent 5 performs processing for controlling a relation between the above described voice recognition processing and the voice synthetic processing via the bus B (processing for controlling a relation between the above described voice identification via the bus B comprises processing for controlling a relation between a timing to perform the voice identification processing in the language analysis constitution agent 3 and a timing to perform the voice synthetic processing in the voice synthetic agent 8 or processing for designating a content of the voice synthesis or the like) and processing for analyzing and implementing the above inputted content information or the like.

Furthermore, the user learning agent 4 is an agent for performing high intellectual processing including what is called learning function. Specifically, receiving the above voice-identified content information via the bus B, the user learning agent 4 sectionalizes the received content information for each user to store them as a usage record. Then, referring to the past usage record for each user, the user learning agent 4 analyzes and accumulates a habit or a taste of the user. Simultaneously, the user learning agent 4 stores a request from the user who has not completed the processing yet at this time.

In parallel with this, the user learning agent 4 performs an example request processing or the like in a performing search processing according to the present invention to be described later, in the case that the user inputs a search condition which is not registered,.

Alternatively, the edit agent 6 is an agent for performing middle level intellectual processing. Specifically, the edit agent 6 receives necessary information from the AV information data base 15 via the data base agent 12 in response to a request from the user and performs the processing for editing a list of the AV information capable of being reproduced or the like.

Furthermore, the search agent 11 is an agent for performing the middle level intellectual processing. Specifically, the search agent 11 searches in the AV information data base 15 via the data base agent 12 in response to a request from the user or performs the processing for searching in the exterior network 16 via the download agent 13.

In this case, the database agent 12 is an agent for performing comparatively low intellectual processing. Specifically, despite the user requests or not, the database agent 12 updates a content of the AV information database 15 and the AV information recording portion 14 by using the AV information received from the exterior network 16 via the download agent 13. Simultaneously, the database agent 12 performs the processing for organizing and managing the information in the AV information database 15 or the like other than searching.

Furthermore, the download agent 13 is an agent for performing middle level intellectual processing. Specifically, the download agent 13 newly receives the AV information from the exterior network 16 if necessary. Then, the download agent 13 mainly output the received AV information to the database agent 12.

Alternatively, the search agent 11 searches the AV information by using a new search condition received by the example request processing or the like in the above user learning agent 4, in the search processing according to the present invention to be described later.

On the other hand, the AV control agent 10 is an agent for performing middle level intellectual processing. Specifically, the AV control agent 10 mainly gives and receives the information to and from the system managing agent 9. Simultaneously, the AV control agent 10 performs reproduction control such as controlling of an order for reproducing the AV information or the like and performs recording control such as selection of an information recording medium or the like.

Finally, the system managing agent 9 is an agent for performing comparatively low intellectual. Specifically, the system managing agent 9 gives and receives the information between the system managing agent 17 in the display 18 and each system managing agent connected to the network N. Simultaneously, the system managing agent 9 performs status managing processing of each device such as the audio memory recorder 19 or the like connected to the AV information accumulation unit S and processing like an interface.

In parallel with this, the system managing agent 9 manages a signal to be inputted from the microphone 1 and a signal to be outputted to the speaker 7.

### (2) Embodiment of AV information processing

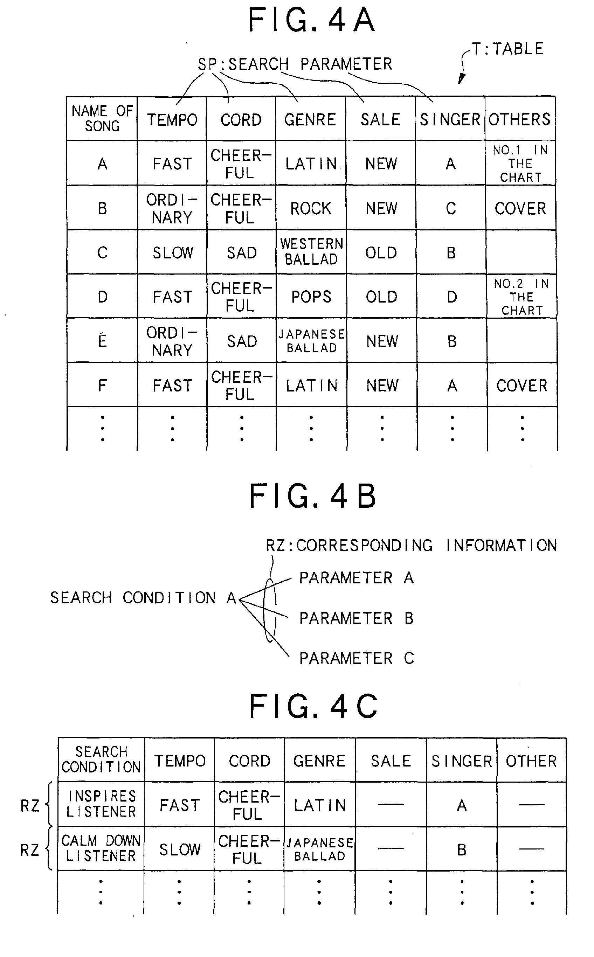

Next, the AV information processing according to the present invention to be performed in the AV information processing unit A including each agent having the above described constitution and the operation will be explained below with reference to FIGS. 4 to 6.

At first, a whole constitution of the AV information processing will be explained with reference to FIG. 4. Here, FIG. 4 shows each processing constituting the AV information processing schematically and in a module. At the same time, FIG. 4 is a flow chart showing a relation between the respective processing and a flow of the information.

As shown in FIG. 4, if the AV information processing according to the present invention is performed, at first, login processing LI is performed.

This login processing LI is mainly performed in the system managing agent 9 and the user learning agent 4. Specifically, by inputting the voice to the microphone 1, the identification processing to know who is the user and processing for reading the usage record for each user in accordance with the identification processing or the like are performed. Then, a result from the identification processing is outputted to the input processing IP and accumulated information processing CK. Alternatively, even while one user is using the AV information processing unit A, the login processing LI is performed every when the voice is inputted from the one user.

Next, the input processing IP is mainly implemented in the system managing agent 9, the voice recognizing agent 2 and the language analysis constitution agent 3. Specifically, the input processing IP recognizes a content of a processing request (a processing request including a content of the AV information processing to be performed by the AV processing unit A), which is inputted by the user with the voice via the microphone 1. Then, the input processing IP outputs its result to a request analysis processing RQ.

The request analysis processing RQ serves as the backbone for the AV information processing according to the present embodiment. This request analysis processing RQ is performed mainly by the user learning agent 4, the dialogue agent 5, the search agent 11, the data base agent 12, the system managing agent 9 and the AV control agent 10. Specifically, the request analysis processing RQ performs various processings associated with the processing request inputted from the user and makes a reproduction processing AP reproduce or a recording processing AR perform recording of the AV information or reproduction of the AV information, which are necessary for performing the processing.

Alternatively, the request analysis processing RQ forms a closing loop between itself and the input processing IP to perform the AV information processing desired by the user in the form of a dialogue with the user.

Furthermore, the request analysis processing RQ outputs the information indicating a content to be outputted to a user response processing UR when necessity to output a voice to the user in the above dialogue with the user arises. In this case, if the AV processing unit A does not have the information associated with the processing request inputted by the user, the request analysis processing RQ outputs the information that the information related to the processing request is outputted in a voice to the user response processing UR or outputs the information that the information indicating AV processing unit A does not have the information associated with the processing request is outputted in a voice to the user response processing UR.

Furthermore, the request analysis processing RQ outputs terminating information that the input of the processing request should be terminated to a logout processing LO, when it becomes clear that the user terminates the input of the processing request with respect to the AV information processing unit A from the above dialogue with the user.

On the other hand, after receiving the result of the identification processing, which is outputted from a login processing LI, the accumulated information processing CK is mainly performed in the user learning agent 4, the dialogue agent 5, the search agent 11 and the data base agent 12. Specifically, the accumulated information processing CK confirms whether or not there is a processing request which is not completed in the processing request after the login processing LI performed last time. Then, in the case that there is such a processing request and the AV information processing unit A has the AV information capable of completing this processing request, the accumulated information processing CK outputs the information that this processing request can be completed to the user response processing UR.

Thus, the user response processing UR forms the information that the voice output outputted from the request analysis processing RQ is performed or forms a response sentence to be used for a response to the user associated with the information outputted from the accumulated information processing CK in accordance with the user's character. Then, the user response processing UR outputs the response information to the output processing OP. In this case, the user response processing UR is mainly performed in the user learning agent 4 and the dialogue agent 5.

Next, the output processing OP is mainly performed in the voice synthetic agent 8, the language analysis constitution agent 3 and the system managing agent 9. Specifically, the output processing OP converts the response information to be outputted from the user response processing UR to a voice to be outputted in practice, then, outputs the voice to the user via the speaker 17. At the same time, in the case that there is information to be outputted by an image, the output processing OP indicates a content of the image on the display 18 via the system managing agents 9 and 17.

On one hand, the reproduction processing AP is mainly connected to the AV information accumulation unit S via the network N. Simultaneously, the reproduction processing AP is performed in the system managing agent and the reproduction agent 10A of respective devices having the function to reproduce the AV information. Specifically, the reproduction processing AP entirely performs reproduction of the AV information on the basis of the instructing information from the request analysis processing RQ and feeds back the reproduced AV information and the controlling information that the reproduction is terminated or the like to the request analysis processing RQ.

On the other hand, the recording processing AR is mainly connected to the AV information accumulation unit S via the network N. Simultaneously, the recording processing AR is performed in respective devices having a function to record the AV information and the system managing agent and the recording agent 10B of respective devices having the function to reproduce the AV information. Specifically, the recording processing AR entirely performs reproduction of the AV information and recording of the reproduced AV information on the basis of the instructing information from the request analysis processing RQ and feeds back the controlling information that the recording is terminated or the like to the request analysis processing RQ.

Alternatively, a logout processing LO is mainly performed in all system managing agents and the user learning agent 4. Specifically, the logout processing LO performs the reset processing and the termination processing of the AV information processing unit A itself and performs the reset processing and the termination processing of respective devices connected each other on the basis of the termination information from the request analysis processing RQ. Simultaneously, in the case that the AV information processing that is not completed in this last AV information processing remains, after storing the content that the AV information processing still remains, the logout processing LO terminates the entire AV information processing according to the present embodiment. In the case that a power source of the AV information processing unit A itself is not turned off after termination of the logout processing LO, it is necessary to wait a next login processing LI.

At last, an information download processing DL is performed full-time (regardless of whether the login processing LI is performed and the AV information processing starts or not) with being independent from the above described respective processing. The information download processing DL is mainly performed in the user learning agent 4 and the download agent 13. Specifically, the AV information for completing the AV information processing, which was not completed, is received from the exterior network 16, and it is recorded in the AV information recording portion 14. Simultaneously, the AV information database 15 is updated.

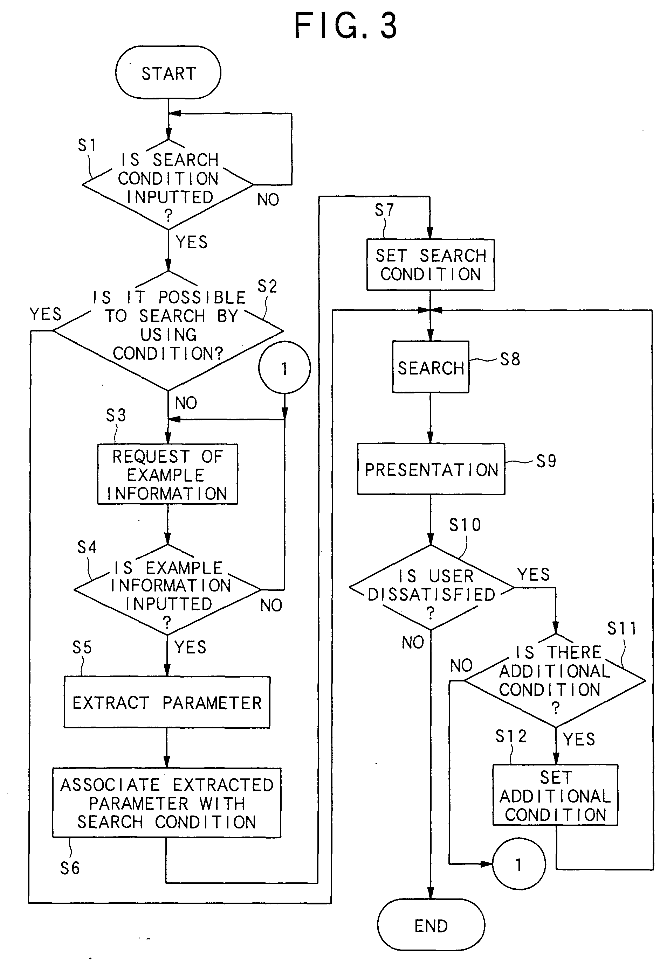

Next, with respect to search processing of a song as the AV information according to the present invention including the processing for reproducing the AV information, an explanation will be given with reference to FIGS. 3 to 5.

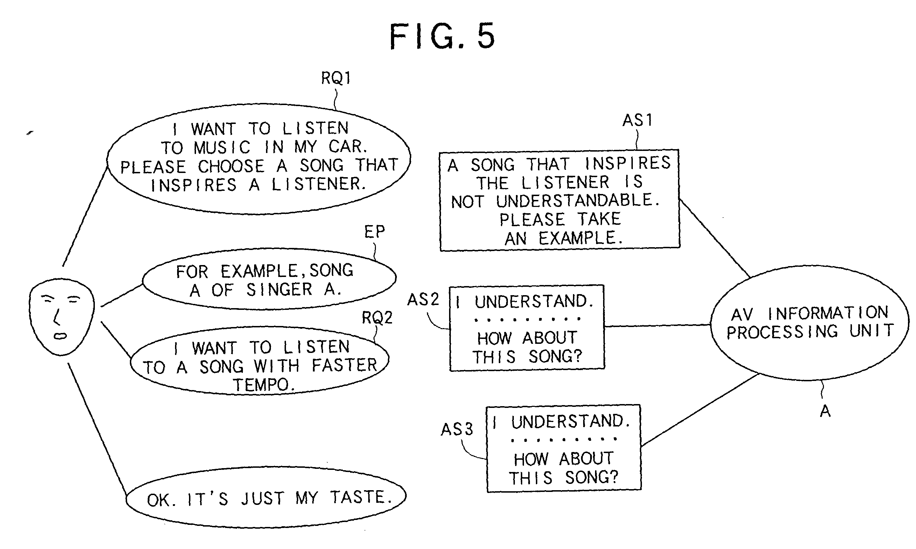

Here, FIG. 3 is a flow chart showing the search processing, FIGS. 4A to 4C are diagrams explaining a parameter or the like, which is used in the search processing and FIG. 5 is a diagram conceptually explaining the search processing.

According to the search processing according to the present invention, as shown in FIG. 3, at first, the voice recognizing agent 2 and the language analysis constitution agent 3 confirm whether or not a search condition that distinguishes the song desired to search, (more specifically, for example, a search condition to search "a song inspires a listener" or the like) is inputted from the user (step S1).

Then, if the search condition is not inputted (step S1; NO), it is necessary to wait until it is inputted. If it is inputted (step S1; YES), in turn, the search agent 11 determines whether or not this inputted search condition exists in the search parameters accumulated in advance in the search agent 11, namely, when this inputted search condition accords with any one of the search parameters, the search agent 11 determines whether or not the search agent 11 is capable of searching within the AV information recording portion 14 or the like by using this search condition as a search parameter (step S2).

The above search parameter accumulated in the search agent 11 is explained below with reference to FIG. 4A. The search parameters SP are accumulated in a form of a table T for each of songs accumulated in the AV information recording portion 14 to define each song.

In this case, in an example shown in FIG. 4A, with respect to a song A, "fast" indicating a tempo of the song A, "cheerful" indicating a cord (ambience) of the song A, "Latin" indicating a genre of the song A, "singer A" indicating a singer who sings the song A and "No. 1 in the chart" indicating other information regarding the song A are associated with the search parameters SP of the song A, respectively. Such search parameters SP for each song are accumulated in the agent 11 in a form of the table T.

In the determination in step S2, when the inputted search condition (step S1) is associated with any one of the search parameters SP stored in the search agent 11 (step S2; YES), the search agent 11 sets the search condition itself as a search parameter (step S7) to start searching of the corresponding song (step S8).

On the other hand, in the determination in step S2, when the inputted search condition (step S1) are not associated with any one of the search parameters SP (step S2; NO), it is impossible to search a song associated with a search condition desired by the user as it is. Therefore, the user learning agent 4 controls in such a manner that a voice requesting to input an example information illustrating a song which the user desires to search (specifically, a name of a song or a name of a singer, which is associated with the inputted search condition) is outputted to the user by using the language analysis constitution agent 3 and the voice synthetic agent 8 (step S3).

Then, the voice recognizing agent 2 and the language analysis constitution agent 3 determine whether or not a name or the like of a song associated with the search condition is inputted as the example information (step S4). If there is no input of the example information (step S4; NO), it is necessary to wait until it is inputted. On the other hand, when the name of the song or the like is inputted as the example information (step 4 S4; YES), in turn, the user learning agent 4 extracts the above search parameter SP which defines the song from the inputted song as the example information (step S5).

This processing of the step S5 is more specifically explained as follows. For example, in the case that a name of a song is inputted as the above example information, searching the song associated with the name of the song in the above table T, the processing of the step 5 extracts the search parameter SP of the corresponding song. Alternatively, for example, in the case that a name of a singer is inputted as the above example information, searching the song associated with the name of the singer in the above table T, the processing of the step 5 extracts the search parameter SP of the corresponding song.

When the search parameter SP is extracted from the example information in the step S5, in turn, the corresponding information is formed and recorded in the user learning agent 4 (step S6) so that the extracted search parameter SP is associated with the inputted search condition (step S1).

In this step S6, for example as shown in FIG. 4B, forming corresponding information RZ for associating three search parameters SP such as search parameters a, b and c or the like extracted in the step S5 as a search parameter, which indicates the search condition inputted in the step S1 (for example, a search condition "a song inspires a listener"), then, the formed corresponding information RZ is stored in the user learning agent 4.

The corresponding information RZ is specifically explained as follows. As shown in FIG. 4C, for example, the corresponding information RZ associates "fast" associated with a tempo, "cheerful" associated with a cord (ambience), "Latin" associated with a genre and "singer A" associated with a singer as one group of the search parameters SP associated with the search condition, i.e. "a song inspires a listener" and this corresponding information RZ is stored in the user learning agent 4.

Then, when association of the search parameters SP is completed, in turn, setting a new condition for search by the search parameters SP extracted in the step S5 (step S7), the newly set condition is used to search in the AV information recording portion 14 (step S8). In this step S8, the download agent 13 and the database agent 12 allow actual search processing to be performed under control of the search agent 11.

Next, when the search is completed, by using the voice synthetic agent 8, the searched song is outputted to the user (step S9).

The voice recognizing agent 2 and the language analysis constitution agent 3 confirm whether or not a voice that the song dissatisfies the search conditions desired by the user is inputted from the user who listens to the outputted song (step S10). Then, if the song satisfies the user (step S10; NO), the search processing is terminated and father processing (specifically, recording the outputted song in a MD or the like) is performed by the instruction from the user.

On the other hand, in the determination in the step S10, when the outputted song does not satisfy the user (step S10; YES), in turn, it is determined whether or not there is a search parameter SP to be added to the search in the voice of the user, which is inputted in the step S10 (step S11). When the search parameter SP to be added to the search exists (step S11; YES), adding the search parameter SP to be added and setting a new search condition (step S12), the processing returns to the step S8 to perform searching again.

On the other hand, when there is no parameter SP to be added (step S11; NO), it is not possible to search the song associated with the search conditions desired by the user at this stage. Therefore, the processing returns to the step S3 and performs the above described input request of the example information again (step S3). Hereinafter, the above described series of processing are repeated.

After the corresponding information RZ is accumulated, if the same search condition (in the present embodiment, "a song inspires a listener") is inputted again, searching the search parameter SP associated with this search condition in the table T on the basis of the accumulated corresponding information RZ, the search agent 11 searches the corresponding song on the basis of the search parameter SP searched in the table T to output it.

Additionally, in the step S4, if a plurality of example information (for example, a plurality of names of song) are inputted, the common search parameters SP among the plural example information is extracted in the processing of the step S5.

### Examples

Next, an example of dialogues between the user and the AV information processing unit A when the above described series of search processing are performed will be explained with reference to FIG. 5.

As shown in FIG. 5, at first, the user desires to listen to "a song inspires a listener". Then, the user vocalizes the request RQI that the user desires to listen to "a song inspires a listener" to the microphone 1 of the AV information processing unit A as the search condition, the AV information processing unit A identifies it (refer to the step S1 in FIG. 3).

In this case, when the search parameter SP, i.e. "a song inspires a listener" is not accumulated in the search agent 11 (refer to the step S2; NO in FIG. 3), a response AS1 is generated from the speaker 7 to indicate that the search parameter SP, i.e. "a song inspires a listener" is not accumulated in the search agent 11 and to request inputting of the example information such as the song name associated with the search condition (refer to the steps S3 and S4 in FIG. 3).

Then, when examples EP from the user including the example information associated with the response AS1 are inputted (refer to the step S4; YES in FIG. 3), the search parameter SP is extracted from the example information to perform the response AS2 including the song associated with this extracted search parameter SP (refer to the steps S5 to S9 in FIG. 3).

Next, when a requirement RQ2 including the search parameter SP from the user including that the song does not satisfy the search conditions and an additional search parameter (in case of FIG. 5, "fast" is corresponded with the additional search parameter) is performed with respect to the response AS2 by the user, (refer to steps S10 and S11), a new song is searched while including the added search parameter SP (refer to steps S11, S12 and S8 in FIG. 3) to perform a response AS3 including the song as a new research result (refer to steps S9 in FIG. 3).

As described above, according to the search processing of the present embodiment, when the search parameter SP associated with the inputted search condition is not accumulated in the search agent 11, a search parameter SP is newly extracted from the example information separately inputted, and a song associated with the extracted search parameter SP is searched and outputted, so that a song desired by the user is capable of being searched and outputted on the basis of the example information from the user even in the case that the search parameter SP associated with the search condition is not accumulated and it is not possible to search a song on the basis of the search parameter SP associated with the search condition.

Alternatively, even when the same search condition is inputted again after the search condition is inputted once, it is possible to rapidly search a desired song on the basis of the accumulated corresponding information RZ.

Furthermore, since the search parameter SP, which is common among the inputted plural example information, is extracted, it is possible to accurately search and output a desired song by properly extracting the common search parameter SP.

Furthermore, since the searched song itself is outputted as sound, it is possible to provide a song

## Claims

1. An AV information processing unit comprising:
an AV information accumulating device for accumulating AV (Audio Visual) information, which include any one of audio information, video information and data information associated with at least any one of the audio information and the video information;
a characteristic information accumulating device for accumulating characteristic information, which defines said accumulated AV information, for said each AV information;
an inputting device for inputting search characteristic information defining said accumulated AV information required to be searched;
an example inputting device for inputting example information to illustrate said AV information having a characteristic indicated by the search characteristic information when said inputted search characteristic information is not included in said accumulated characteristic information;
an extracting device for extracting example characteristic information being said characteristic information, which defines said inputted example information, from said example information; and
an outputting device for searching said AV information associated with said extracted example characteristic information in said AV accumulating device and outputting said searched AV information to an exterior as said AV information associated with said search characteristic information.

2. The AV information processing unit according to claim 1, further comprising:
a corresponding information accumulating device for forming a corresponding information, which associates said extracted example characteristic information to said inputted search characteristic information and storing said formed corresponding information; and
a search device for searching said example characteristic information from said characteristic information accumulating device on the basis of said accumulated corresponding information when said search characteristic information is inputted again after said corresponding information is accumulated in said corresponding information accumulating device;
wherein said outputting device searches said AV information associated with said searched example characteristic information from said AV accumulating device when said search characteristic information is inputted again and said outputting device outputs said searched AV information to an exterior as said AV information associated with said search characteristic information.

3. The AV information processing unit according to claim 1 or 2, wherein said example inputting device is used for inputting said different and plural example information and said extracting device extracts said example characteristic information, which is common among said inputted plural example information, from each of said example information.

4. The AV information processing unit according to any one of claims 1 to 3, wherein said outputting device outputs said AV information associated with said extracted example characteristic information to an exterior as said AV information associated with said search characteristic information by using at least any one of a sound and an image.

5. The AV information processing unit according to any one of claims 1 to 4, wherein said inputting device comprises a voice receiving device for receiving input of said search characteristic information by voice.

6. The AV information processing unit according to any one of claims 1 to 5, wherein said example inputting device comprises an example voice receiving device for receiving input of said example information by voice.

7. An information recording medium, in which an AV information processing program is recorded so as to be capable of being read by a computer, for making said computer function as:
an inputting device for inputting search characteristic information defining said AV information required to be searched, in AV information which are accumulated in advance and which include any one of audio information, video information and data information associated with at least any one of the audio information and the video information;
an example inputting device for inputting example information illustrating said AV information having a characteristic, which is indicated by the search characteristic information, when said inputted search characteristic information is not included in said accumulated characteristic information, which defines said accumulated AV information and are accumulated in advance;
an extracting device for extracting example characteristic information being said characteristic information, which defines said inputted example information, from said example information; and
an outputting device for searching said AV information associated with said extracted example characteristic information and outputting said searched AV information to an exterior as said AV information associated with said search characteristic information.

8. The information recording medium according to claim 7, in which said AV information processing program is recorded so as to be capable of being read by said computer, for further making said computer function as:
a corresponding information accumulating device for forming a corresponding information, which associates said extracted example characteristic information to said inputted search characteristic information and storing said formed corresponding information; and
a search device for searching said example characteristic information on the basis of said accumulated corresponding information when said search characteristic information is inputted again after said corresponding information is accumulated;
wherein said information recording medium makes said computer functioning as said outputting device function such that it searches said AV information associated with said searched example characteristic information when said search characteristic information is inputted again and it outputs said searched AV information to an exterior as said AV information associated with said search characteristic information.

9. The information recording medium according to claim 7 or 8, in which said AV information processing program is recorded so as to be capable of being read by said computer, wherein said information recording medium uses said computer functioning as said example inputting device to input different and plural said example information and makes said computer functioning as said extracting device function such that it extracts said example characteristic information, which is common among said inputted plural example information, from each of said example information.

10. The information recording medium according to any one of claims 7 to 9, in which said AV information processing program is recorded so as to be capable of being read by said computer, wherein said information recording medium makes said computer functioning as said outputting device function such that it outputs said AV information associated with said extracted example characteristic information to an exterior as said AV information associated with said search characteristic information by using at least any one of a sound and an image.

11. The information recording medium according to any one of claims 7 to 10, in which said AV information processing program is recorded so as to be capable of being read by said computer, wherein said information recording medium makes said computer functioning as said example inputting device function as a voice receiving device for receiving input of said search characteristic information by voice.

12. The information recording medium according to any one of claims 7 to 11, in which said AV information processing program is recorded so as to be capable of being read by said computer, wherein said information recording medium makes said computer functioning as said example inputting device function as an example voice receiving device for receiving input of said example information by voice.
